# EUROPEAN PATENT SPECIFICATION

(11) **EP 2 475 022 B1**
(45) Date of publication and mention of the grant of the patent: **10.12.2014**
(21) Application number: 10840303.1
(22) Date of filing: 23.12.2010
(51) Int. Cl.: B60K 1/04, H01M 10/0525, H01M 2/10, H01M 10/42

(54) **LITHIUM ION BATTERY SPECIALLY USED FOR STARTING OF MOTORCYCLE**
SPEZIELL ZUM STARTEN VON MOTORRÄDERN VERWENDETE LITHIUMIONENBATTERIE
BATTERIE AU LITHIUM-ION UTILISÉE SPÉCIALEMENT POUR LE DÉMARRAGE D'UN MOTOCYCLE

(30) Priority: 06.08.2010 CN 201020291266 U; 31.12.2009 CN 200920319341 U
(43) Date of publication of application: 11.07.2012
(73) Proprietor: Hangzhou Wanma High-Energy Battery Co., Ltd., Zhejiang 310022 (CN)
(72) Inventor: CHEN, Gang, Hangzhou Zhejiang 310022 (CN)
(74) Representative: Hryszkiewicz, Danuta
(86) International application number: PCT/CN2010/002136
(87) International publication number: WO 2011/079513

(56) References cited:
- EP-A1- 1 030 387
- EP-A1- 1 526 601
- WO-A1-2009/025177
- WO-A1-2009/128220
- CN-A- 101 147 276
- CN-A- 101 237 033
- CN-Y- 2 594 997
- CN-Y- 2 734 540
- KR-A- 20010 097 864
- US-A1- 2008 093 142
- US-A1- 2010 104 927

## Description

The invention relates to a lithium-ion battery, and more particularly to a lithium-ion battery specially used for starting motorcycles. As the lithium-ion battery is specially used for starting motorcycles, it forms an integral part of the motorcycles.

Motorcycles are extremely popular as one kind of transport vehicles. Lead-acid batteries are mainly used to start motorcycles, but they have many disadvantages. On the one hand, lead-acid batteries have poor performance, for example, they are heavy in weight, low in specific energy, and short in service life; they also have low power and the starting current is approximately 10 C. On the other hand, since lead-acid batteries contain environmentally harmful substances such as heavy metals (e.g. lead) and sulfuric acid, environmental pressure is increasing when lead-acid batteries are used for motorcycles along with increasing deterioration of human living environment and continually enhanced environmental protection consciousness. Many countries have restricted the production and applications of products containing lead and bans on lead have been gradually popularized and implemented internationally. Eventually, lead-acid batteries used for starting motorcycles will be eliminated.

As lead-acid batteries specially used for starting motorcycles have certain requirements on specifications and performance, for instances, the voltage for such lead-acid battery is generally 12 V, the lead-acid batteries are mounted in a space of a certain size on motorcycles, one specification of lead-acid battery is only applicable to a certain model of motorcycle and different specifications of lead-acid batteries are incompatible with the same motorcycles. In other words, once the lead-acid batteries for starting motorcycles are damaged, only the same specifications of the lead-acid batteries can be replaced at present. As motorcycles with different engine displacements are required, lead-acid batteries for starting the motorcycles have greatly varied capacities accordingly. Moreover, due to the fact that lead-acid batteries having the same capacity are restricted by different mounting spaces on different models of motorcycles, the lead-acid batteries now have about 100 different sizes and 400 specifications. Consequently, large-scale mechanized production of lead-acid batteries cannot be achieved as a result of large investment in moulds, complicated production management and various materials.

Furthermore, in American and European countries, motorcycles are for leisure activities and sports for people above middle class. When used for racing, motorcycles are required to be lighter and faster. But the gravimetric specific energy of a lead-acid battery is 1/4 of that of a lithium-ion battery while the weight is 4 times heavier than that of a lithium-ion battery; therefore the weight of a motorcycle is increased and more oil consumption is required accordingly.

Under the requirement of compact structure for motorcycles as a whole, lead-acid batteries with sufficient capacity and starting performance cannot be mounted in the limited spaces during the design. This is one of the difficulties for structural innovation of motorcycles. Apart from that, the volumetric specific energy of a lead-acid battery is 1/3 of that of a lithium-ion battery.

US 2010104927 A1 recites a temperature-controlled battery configuration. The battery configuration includes a casing, and a plurality of alternating lithium-ion cell packs and spacers defining vertical channels. The casing is flooded with a thermally-conductive electrically-insulating fluid, which coats the battery cells for conducting heat away from the battery cells. WO 2009025177 A1 discloses a battery pack with a cooling function. The battery pack consists of a packing case, a combination battery housed in the packing case and having a plurality of flat and rectangular type secondary batteries which are laminated each other, a hollow body interposed at least between the secondary batteries in the combination battery and made of a thermoplastic resin film having a melting point of 110 to 200 °C, and a cooling medium passed through the hollow body. EP 1030387 A1 discloses a battery device loaded on a moving body. The battery device consists of: a modular casing having a battery housing section and a large number of terminal openings; a large number of secondary batteries housed in the battery hosing section; and an adhesive charging opening and an adhesive efflux opening part in register with each terminal opening, wherein the adhesive efflux opening part communicates with each terminal opening and with the adhesive charging opening, and the adhesive efflux opening part causes the adhesive charged through the adhesive charging opening to flow around the peripheral surface of the secondary battery.

At present, among all motorcycle starting batteries, there is not a new type of starting battery that is light and environmental friendly and which has a long service life and high specific energy to replace all conventional lead-acid batteries. In addition, such battery must have fewer specifications and moulds. There is an industrial tendency to develop a new type of battery and the new type of battery will have a broad market prospect.

in view of the above-described problems, it is one objective of the invention to provide a lithium-ion battery specially used for starting motorcycles. The battery is reasonably designed, energy-saving, and environmental friendly and meanwhile it has a long service life, excellent discharge performance, and a strong barrier-free replacement capability.

To achieve the above objective, in accordance with one embodiment of the invention, there provided is a lithium-ion battery specially used for starting motorcycles, comprising a positive terminal, a negative terminal, a positive lead, a negative lead, an open-mouthed rectangular can comprising a battery mounting chamber, a cover matching the can, and a cell assembly comprising four lithium-ion cells in series, a positive electrode, and a negative electrode, wherein the positive terminal and the negative terminal are both fixed on the cover and the cover is fixed to the can; one end of the positive lead is fixed to the positive terminal and the other end is fixed to the positive electrode of the cell assembly; one end of the negative lead is fixed to the negative terminal and the other end is fixed to the negative electrode of the cell assembly; the four lithium-ion cells are in the shape of a flat rectangle, each lithium ion cell has four angles, and the four lithium-ion cells are parallel with one another; the lithium-ion battery further comprises a cell bracket mounted in the battery mounting chamber, and at least three support cushions; a clearance is formed between two adjacent lithium-ion cells, and the clearance is arranged with at least one support cushion; the cell bracket comprises four bracket bodies; each bracket body is in the shape of a right triangular prism formed by a four-layered cavity; the bottom of the cavity is in the shape of a right triangle, and the four layers of the cavity in each bracket body overlap with one another; each cavity comprises an inlet, which is opposite to a right angle of the right triangle of that cavity; and the four angles of each lithium-ion cell are separately mounted in the cavities at the same level of four bracket bodies. It makes the structure of the lithium-ion battery provided by the invention more reasonable and four lithium-ion cells can be more effectively mounted on the cell bracket. Also, such a structure makes the four lithium-ion cells mounted on the cell bracket have better anti-vibration performance and heat dissipation performance. It effectively prevents deformation of the lithium-ion cells, thus the lithium-ion battery provided by the invention is improved in terms of better performance and prolonged service life.

Preferably, the positive terminal and/or the negative terminal is arranged with an insulation sleeve, respectively. The cell assembly comprises four 3.2 V lithium-ion cells in series. The lithium-ion cells are all lithium iron phosphate batteries. A waterproof mechanism is arranged between the can and the cover. Such a structure allows the lithium-ion battery provided by the invention to be specially used for starting motorcycles because the lithium-ion battery is light, environmental friendly, and long in service life and meanwhile it does not produce lead pollution either in the manufacturing process or in actual applications.

Preferably, the waterproof mechanism comprises a waterproof groove and a waterproof raised bar, in which the waterproof groove is arranged on the top of the can and the waterproof raised bar that matches the waterproof groove is arranged at the bottom of the cover. The waterproof raised bar is embedded in the waterproof groove. Such a structure makes the waterproof mechanism provided by the invention more simple and the waterproof mechanism can be easily manufactured and has a better waterproof effect.

Preferably, four slots are disposed on the inner wall of the battery mounting chamber. The four bracket bodies matching the four slots are clamped in the slots, respectively. Such a structure allows the cell bracket of the lithium-ion battery provided by the invention to be more easily and firmly mounted in the battery mounting chamber of the can, thus the whole performance of the lithium-ion battery is improved.

Preferably, two opposite inner walls of the battery mounting chamber are respectively arranged with two first raised bars extending from the bottom to the top of the battery mounting chamber along its inner walls. The end of the first raised bar curves in its raised direction to form four slots that match the bracket bodies. The other two opposite inner walls of the battery mounting chamber are respectively arranged with two columns extending from the bottom to the top of the battery mounting chamber along its inner walls. At least one of the two columns has a second raised bar extending in the axial direction of that column. The end of the second raised bar curves in its raised direction to form two limit raised bars that match the bracket bodies. The slots and the limit raised bars are used to fix the bracket bodies.

Preferably, two opposite inner walls of the battery mounting chamber are respectively arranged with two raised bars extending from the bottom to the top of the battery mounting chamber along its inner walls. The end of the raised bars curves in its raised direction to form four slots that match the bracket bodies. The other two opposite inner walls of the battery mounting chamber are respectively arranged with two columns extending from the bottom to the top of the battery mounting chamber along its inner walls. The other two opposite inner walls of the battery mounting chamber are arranged with a limit plate that extends from the bottom to the top of the battery mounting chamber along its inner walls and which is between the two columns and meanwhile close to one of the columns. The slots and the limit plate are used to fix the bracket bodies.

Preferably, the lithium-ion battery further comprises bases, which are fixed at the bottom of the can. The bottom of the cover is arranged with a plurality of locating convex blocks, which hold the cell bracket. The bases are designed to meet various circumstances that different specifications of the batteries are required, so that the batteries have wider applications and can be freely combined into different sizes to replace different models of the lead-acid batteries available for motorcycles.

Preferably, the positive terminal and the negative terminal are both fixed on the cover by injection molding. One end of the positive lead and the negative lead is fixed on the positive terminal and the negative terminal by screws, respectively. Consequently, the positive terminal and the negative terminal can be more securely fixed on the cover, thus the whole structure of the lithium-ion battery becomes more reliable. Moreover, as one end of the positive lead is fixed on the positive terminal and one end of the negative lead is fixed on the negative terminal by screws, the length of the positive lead and the negative lead can be controlled in the shortest range, which helps to improve the starting performance of the lithium-ion battery provided by the invention.

Preferably, the lithium-ion battery also comprises a seal ring matching the waterproof groove and the seal ring is mounted in the waterproof groove of the can. Such a structure make the lithium-ion battery provided by the invention have a better waterproof performance and the whole performance of the lithium-ion battery is improved accordingly.

Preferably, the lithium-ion battery also comprises a plurality of fixed screws and the can is arranged with matching through holes. The through holes are perpendicular to the bottom of the can. The upper end of each through hole is on the top of the can and the lower end is at the bottom of the can. The bottom of the cover is arranged with blind holes matching the through holes. The cover is fixed on the can via the fixed screws and the fixed screws go through the through holes and the blind holes. In this manner, the structure of the lithium-ion battery provided by the invention is simpler and more secure. The lithium-ion battery can be easily assembled and disassembled and the whole structure is more reasonable.

Preferably, the through holes are located at the center of the columns and extend through the whole columns in the axial direction of the columns.

Preferably, the battery mounting chamber of the can is arranged with a wire duct matching the positive lead and the negative lead, which are both in the wire duct. The four lithium-ion cells in the cell assembly are connected in series via a patch panel or connecting wires. In this manner, the structure of the lithium-ion battery provided by the invention is more reasonable. The positive lead and the negative lead can be easily wired, the positive lead and the negative lead are unlikely to be pressed by the can and the cell bracket can be easily mounted in the battery mounting chamber of the can.

Preferably, the bottom of the can is arranged with a fixed support, which is used to heighten the cell bracket and which is in the shape of a "#", "X", or parallel lines. Such a structure makes it easier for the cell bracket to be mounted in the can. When a "#" shaped fixed support is adjustable, different models of the cell assemblies can be mounted, therefore the lithium-ion battery has extended its applicability.

Preferably, the can or the cover is arranged with an equalization circuit, which is connected with the cell assembly by means of the connecting wires.

Preferably, two adjacent bracket bodies can be coupled by reinforced ribs and/or tapes. It enables the bracket bodies provided by the invention to be securely coupled and the bracket bodies are safer, more stable and reliable when they are used.

Preferably, one right-angle side of the right triangular prism is closely against the inner wall of the can.

Preferably, one side of each base is arranged with a fixed hole and the opposite side is arranged with a support leg, which is fixedly coupled to the fixed hole at the outer bottom of the can. The adjacent bases are fixedly coupled together by the support legs and the fixed holes on the bases. Such a structure is convenient for disassembly to form different sizes as required.

Compared with the prior art, advantages of the invention are summarized below:
1. The dimensions of the can and the cover used in the invention are consistent with those for a standard battery can used for motorcycles and the lithium-ion battery provided by the invention can freely replace conventional lead-acid batteries. Moreover, the bases with different height are combinable with the same type of the lithium-ion battery can to form different types of the lithium-ion batteries so as to replace different models of the lead-acid batteries used currently for motorcycles; therefore, fewer moulds for plastic cans are required.
2. The cell assembly is mounting friendly and its components are simple in structures and low in production costs. The inner structure assembly is flexible, adjustable and reliable and meanwhile has strong applicability.
3. Light and the total weight is 1/3 of that for a conventional lead-acid starting battery.
4. It is environmental friendly and free of pollution problems caused by heavy metals such as lead, cadmium, mercury and the like.
5. It has an extra high power and the starting current is over 40 C.
6. It has extra long cycle life and number of times for charging/discharging is over 2000.
7. It is highly reliable and free of safety issues such as explosion and ignition.

The top of the can of the lithium-ion battery provided by the invention is arranged with a waterproof groove and a waterproof raised bar matching the waterproof groove is mounted at the bottom of the cover. When the cover is fixed on the can, the waterproof raised bar is embedded in and closely contact with the waterproof groove to ensure that the lithium-ion battery has excellent sealing performance to prevent rainwater from entering the can, thus the safety performance of the lithium-ion battery is improved and the service life is significantly prolonged. The bottom of the cover of the lithium-ion battery provided by the invention is arranged with a plurality of locating convex blocks. When the cover is fixed on the can, the locating convex blocks hold the cell bracket to enable it to be properly fixed in the battery mounting chamber. The positive terminal and the negative terminal are arranged with insulation sleeves so as to prevent short circuit of the lithium-ion battery provided by the invention during the transport, so that the safety is improved and the lithium-ion battery can be transported easily.

Lithium-ion batteries, especially lithium iron phosphate batteries such as lithium iron phosphate polymer lithium ion batteries with high magnifications, have high energy density, contain no heavy metals such as lead, cadmium and mercury, have higher power density than lead-acid batteries, and meanwhile they are highly reliable. They are the preferred starting batteries to replace conventional lead-acid batteries. Conventional lithium-ion battery cans are divided into two large categories: metal cans and aluminium-plastic composite film cans. Since the soft aluminium-plastic composite film has better safety performance, it is more suitable for the starting batteries. However, as the aluminium-plastic composite film has insufficient strength itself, the cell bracket is then applied in the invention to support the lithium-ion battery to make its inner structure more robust and reliable.

Among the four lithium-ion cells provided by the invention, the voltage of an individual lithium-ion cell is 3.2 V. If the four lithium-ion cells are connected in series, the voltage is 12.8 V, which is just enough to start motorcycles, therefore the lithium-ion battery provided by the invention is able to be used to start motorcycles. The dimensions of the can used in the invention are the same as those for a conventional lead-acid battery used for starting motorcycles. When a starting battery is required to be replaced for a motorcycle in use, the place for mounting that starting battery fits for the can itself or the combination between the can and different sizes of the bases. Consequently, the motorcycle needs no reconfiguration and the conventional starting batteries can be replaced freely. It is helpful for popularization of the invention. The four bracket bodies used in the invention can be made into standard parts to suit for hundreds of different sizes of starting batteries and meanwhile to save more materials and more costs on moulds.

The lithium-ion battery provided by the invention is of great advantage to environmental protection. It causes no lead pollution during the applications and it has a broad market prospect. The lithium-ion battery has long service life and better discharge performance, which is helpful to improve overall performance of motorcycles.
FIG. 1 is a front view of a lithium-ion battery without an insulation sleeve in accordance with example 1 of the invention;
FIG. 2 is a left view of FIG. 1;
FIG. 3 is a structural representation of a separated cover and can of FIG. 1;
FIG. 4 is a structural representation of a lithium-ion battery's cover bottom in accordance with example 1 of the invention;
FIG. 5 is a top view of a can in accordance with example 1 of the invention;
FIG. 6 is a rear view of FIG. 5;
FIG. 7 is an enlarged front view of a cell assembly mounted on a cell bracket in accordance with example 1 of the invention;
FIG. 8 is a top view of FIG. 7;
FIG. 9 is a structural representation of FIG. 7 without a cell bracket;
FIG. 10 is a front view of a lithium-ion battery without an insulation sleeve in accordance with example 2 of the invention;
FIG. 11 is a top view of FIG. 10;
FIG.12 is a structural representation of a cover bottom in accordance with example 2 of the invention;
FIG.13 is a top view of a can in accordance with example 2 of the invention;
FIG. 14 is an enlarged structural representation of a cell assembly mounted on a cell bracket in accordance with example 2 of the invention;
FIG. 15 is a top view of FIG. 14;
FIG. 16 is a structural representation of FIG. 14 without a cell bracket;
FIG. 17 is an enlarged structural representation of a bracket body of a cell bracket in accordance with example 2 of the invention;
FIG. 18 is a left view of FIG. 17;
FIG. 19 is a top view of FIG. 17;
FIG. 20 is a sectional view of A-A side of FIG. 17;
FIG. 21 is a structural representation of FIG. 19 after clockwise rotation of 45°;
FIG. 22 is a bottom view of FIG. 21;
FIG. 23 is a structural representation of an equalization circuit board and a cell assembly in accordance with the invention;
FIG. 24 is a structural representation of an equalization circuit board and a can in accordance with the invention;
FIG. 25 is a structural representation of a base in accordance with the invention; and
FIG. 26 is a bottom view of a base in accordance with the invention.

The invention is explained in further detail below with the reference to the embodiments and attached drawings. It should be noted that the following embodiments are intended to describe and not to limit the invention.

### Example 1

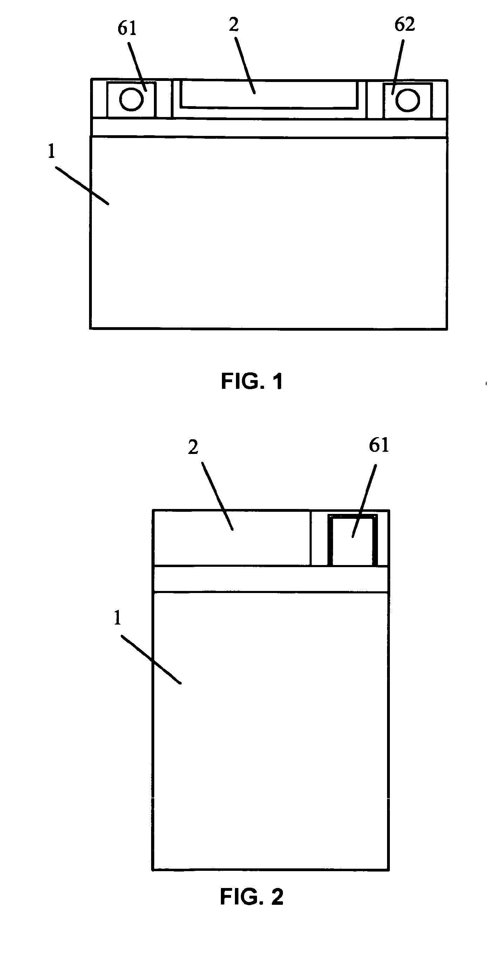

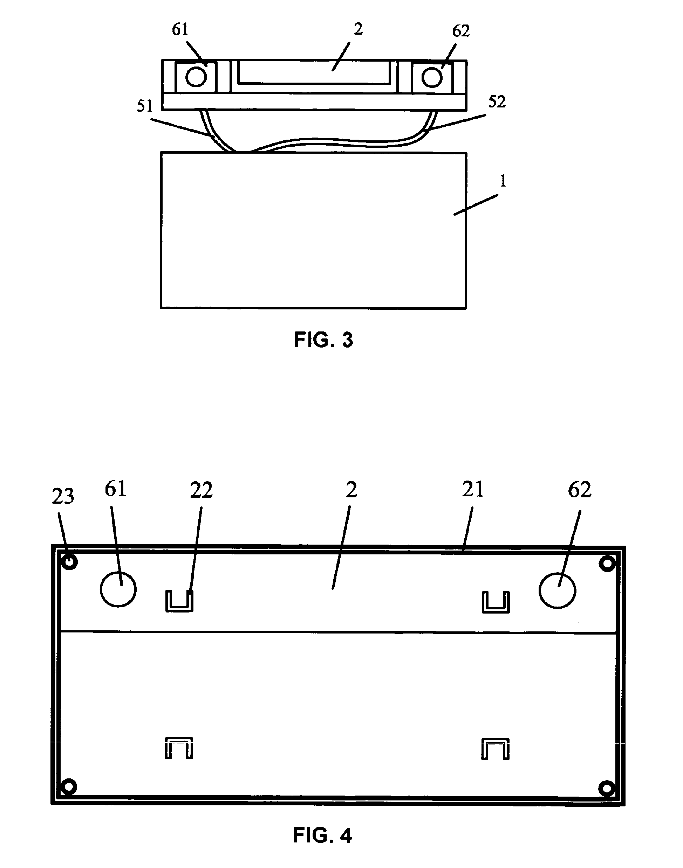

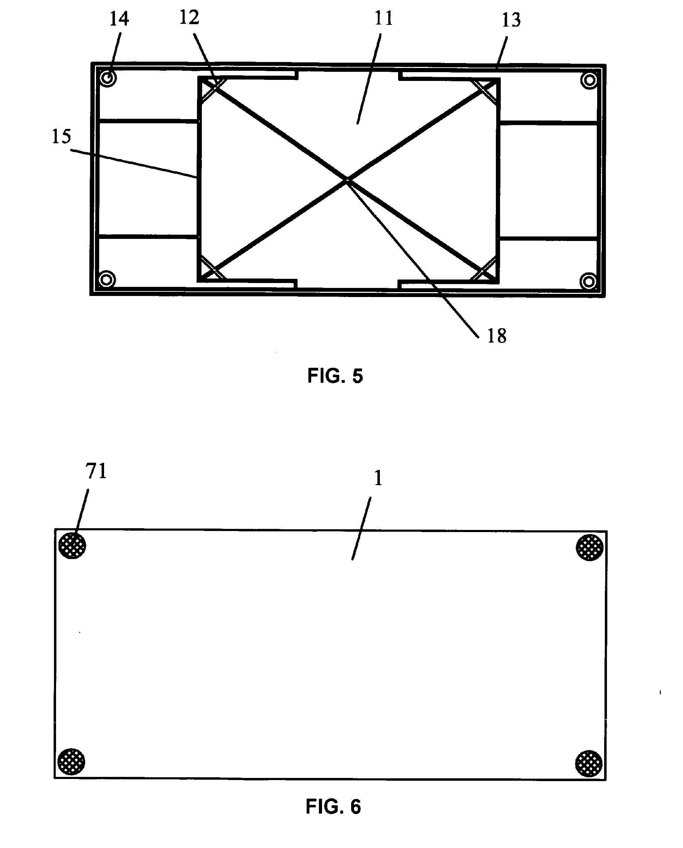

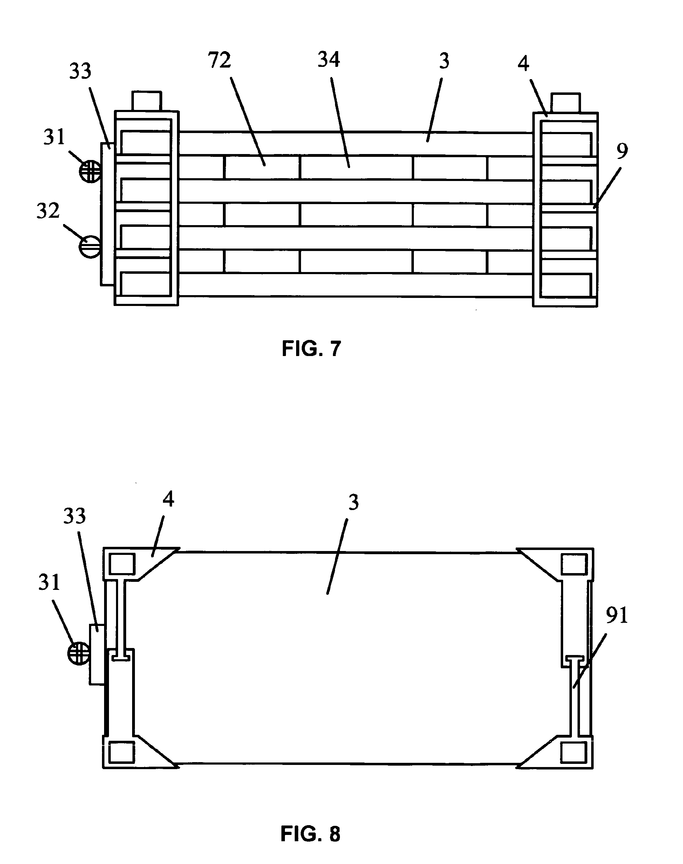

As shown in FIGS. 1-9, a lithium-ion battery specially used for starting motorcycles, in accordance with the invention, comprises a can 1, a cover 2, a cell assembly 3, a cell bracket 4, a positive lead 51, a negative lead 52, a positive terminal 61, a negative terminal 62, insulation sleeves, four fixed screws, four resistance cushions 71, seal rings and six support cushions 72, in which the cell assembly 3 comprises four 3.2 V lithium-ion cells in series via a patch panel 33 to allow the voltage of the cell assembly 3 to be 12.8 V. It is the voltage that a motorcycle requires to start and the lithium-ion battery provided by the invention can be specially used for starting motorcycles. The bottom of the can 1 is arranged with an x-shape fixed support 18 and the cell bracket 4 can be fixed thereon. The x-shape fixed support 18 is used to mount the cell bracket 4 and it is optionally adjustable to accommodate different sizes of the cell bracket 4, thus the applicability of the lithium-ion battery provided by the invention is extended. The four lithium-ion cells of the cell assembly 3 are in the shape of a flat rectangle and they are all lithium iron phosphate batteries. The cans of the four lithium-ion cells are of aluminium-plastic composite film, they are parallel and overlap with one another. Two adjacent lithium-ion cells form a clearance 34, which is helpful for heat dissipation of the cell assembly 3. The cell assembly 3 comprises a positive electrode 31 and a negative electrode 32. In this example, the cell assembly 3 is mounted on the cell bracket 4 and the clearance 34 formed by two adjacent lithium-ion cells is arranged with two support cushions 72. The four lithium-ion cells mounted on the cell bracket 4 have better anti-vibration performance and heat dissipation performance. The support cushions 72 can provide sufficient support and effectively prevent deformation of the lithium-ion cells. In this example, two support cushions 72 are in a group and there are three groups of the support cushions 72. The cell bracket 4 and the cell assembly 3, in accordance with the invention, can be fixed by tapes, for example, wrap the tape around the cell bracket 4 and the cell assembly 3 to reinforce the structure therebetween to allow the cell assembly 3 to be securely fixed on the cell bracket 4. The technology adopted for the lithium iron phosphate batteries is the same as or similar to the prior art. The cell bracket 4 in this example comprises four bracket bodies 9 and two adjacent bracket bodies 9 can be reinforced by a reinforced rib 91, for example, apply an extension piece 91 to the bracket bodies 9. The reinforced rib is formed by connecting the extension pieces 91 on two adjacent bracket bodies 9 together through thermal sealing or bonding, therefore, the lithium-ion cells can be securely fixed on the cell bracket. Alternatively, the four bracket bodies 9 may also be reinforced by using tapes and reinforced ribs at the same time.

The positive terminal 61 and the negative terminal 62 are fixed on the cover 2 by injection molding, which enables the positive terminal 61 and the negative terminal 62 to be more securely fixed on the cover 2. The positive terminal 61 and the negative terminal 62 are both mounted with insulation sleeves so as to prevent short circuit of the lithium-ion battery specially used for starting motorcycles during the transport, so that the safety of the lithium-ion battery provided by the invention is ensured. Furthermore, the insulation sleeve can be mounted either on the positive terminal 61 or on the negative terminal 62 and the insulation sleeves provided by the invention is the same as or similar to those provided in the prior art. One end of the positive lead 51 is fixed on the positive terminal 61 by screws and the other end is fixed on the positive electrode 31 of the cell assembly 3 while one end of the negative lead 52 is fixed on the negative terminal 62 by screws and the other end is fixed on the negative electrode 32 of the cell assembly 3, therefore the length of the positive lead 51 and the negative lead 52 can be controlled in the shortest range. The shorter the length of the positive lead 51 and the negative lead 52, the better the starting performance of the lithium-ion battery specially used for starting motorcycles in accordance with the invention. As a result, one end of the positive lead 51 and the negative lead 52 fixed on the positive terminal 61 and the negative terminal 62 by screws, respectively, helps to improve the starting performance of the lithium-ion battery specially used for starting motorcycles in accordance with this example.

The can 1 is in the shape of an open-mouthed rectangular. The dimensions of the can 1 provided by the invention are the same as those for the cans of conventional lead-acid batteries, i.e. the standard cans for motorcycles. In other words, the lithium-ion battery provided by the invention can freely replace conventional lead-acid batteries. The can 1 comprises a battery mounting chamber 11, in which a cell bracket 4 is arranged together with a wire duct 15 matching the positive lead 51 and the negative lead 52. When the cell assembly 3 is mounted in the battery mounting chamber 11 with the cell bracket 4, the positive lead 51 and the negative lead 52 are both in the wire duct 15 so as to prevent them from being pressed by the cell assembly 3 and the can 1. Therefore the positive lead 51 and the negative lead 52 can be easily wired, which means that the lithium-ion battery can be conveniently mounted and disassembled. A round of a complete waterproof groove 13 is arranged on the periphery of the top of the can 1. The waterproof groove 13 is in the shape of a rectangle matching the shape and size of the seal ring. The seal ring is embedded in and closely contact with the waterproof groove 13. Alternatively, the waterproof groove 13 may not be complete and it can be separated into several segments, as long as it can cooperate with the cover 2 to prevent penetration by water.

The can 1 is arranged with four through holes 14, perpendicular to the bottom of the can 1. The upper end of each through hole 14 is on the top of the can 1 and the lower end is at the bottom of the can 1. In this example, the four resistance cushions 71, matching the four through holes 14, are separately fixed at the lower end of the four through holes 14. In other words, the resistance cushions 71 are fixed at the bottom of the can 1. The bottom of each resistance cushion 71 is arranged with resistance strips, which are laid out in a grid pattern and which are used to provide buffering and increase resistance, so that the lithium-ion battery provided by the invention can be stably mounted in motorcycles. Alternatively, the resistance strips may not be arranged at the bottom of the resistance cushions 71 used in the invention because the resistance cushions are made of rubber, their bottoms are flat and they have excellent resistance increasing effects.

The bottom of the cover 2 is arranged with four blind holes 23, matching the through holes 14 of the can 1. The blind holes 23 and the through holes 14 match the fixed screws, which go through the blind holes 23 and the through holes 14 to fix the cover 2 on the can 1. Since the resistance cushions 71 are fixed at the bottom of the through holes 14, after the fixed screws go through the through holes 14, the resistance cushions 71 can provide sealing for the through holes 14 to prevent rainwater from entering into the can 1 through the through holes 14. It makes the structure of the lithium-ion battery provided by the invention more reasonable. In this example, the bottom of the cover 2 is also arranged with four locating convex blocks 22 and a round of complete waterproof raised bar 21. The shape and size of the waterproof raised bar 21 matches the waterproof groove 13 of the can 1. When the cover 2 is fixed on the can 1 by the fixed screws, the waterproof raised bar 21 is embedded in and closely contact with the waterproof groove 13. It is able to provide an excellent sealing effect between the cover 2 and the can 1 so as to prevent rainwater from entering into the can 1 through the cover 2, thus the service life of the lithium-ion battery provided by the invention is prolonged. Moreover, the surfaces of the waterproof raised bar 21 and the waterproof groove 13 can be roughened to ensure tighter sealing therebetween. After the cover 2 is fixed on the can 1 by the fixed screws, the four locating convex blocks 22 arranged at the bottom of the cover 2 hold the cell bracket 4 to allow it to be securely fixed in the battery mounting chamber 11 of the can 1. Alternatively, the waterproof raised bar 21 may not be complete and it can be separated into several segments, as long as it can cooperate with the waterproof groove 13 at the top of the can 1 to provide an excellent sealing effect between the cover 2 and the can 1.

A waterproof mechanism arranged between the can 1 and the cover 2 is described below: the top of the can 1 is arranged with a round of complete waterproof groove 13, and the bottom of the cover 2 is arranged with a round of complete waterproof raised bar 21 that matches the waterproof groove 13. The waterproof mechanism used in the invention can also use other structures. For example, a round of complete waterproof raised bar 21 can be arranged on top of the can 1 and a round of complete waterproof groove 13, matching the waterproof raised bar 21, can be arranged at the bottom of the cover 2. The preferred number of the resistance cushions 71 used in the invention is four, the number of the blind holes 23 is the same as that of the fixed screws, and the number of the through holes 14 is the same as that of the resistance cushions 71. Optionally, a base can be arranged at the bottom of the can 1, in accordance with the invention, to adjust the overall height of the can 1 so as to extend the applicability of the lithium-ion battery.

### Example 2

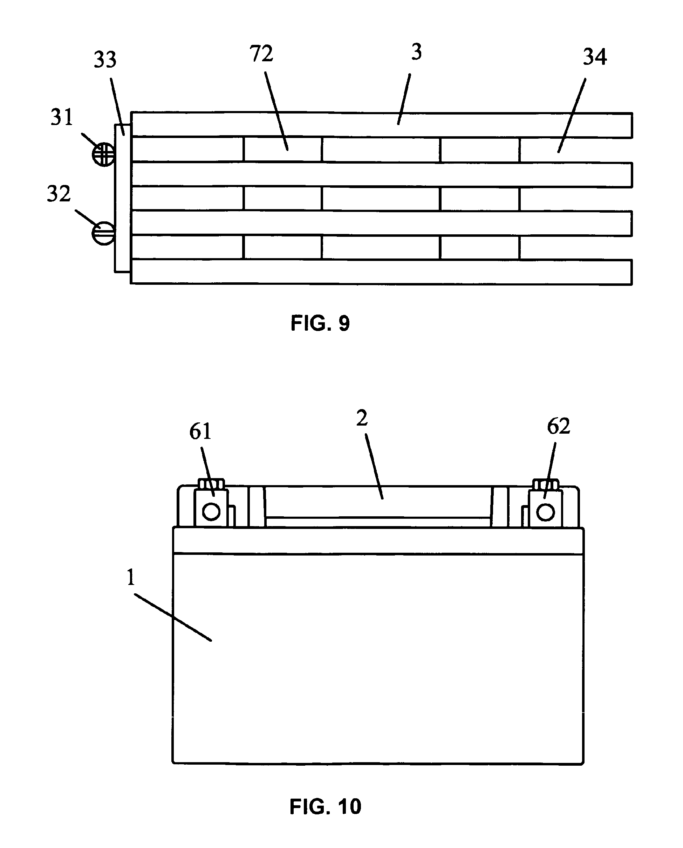

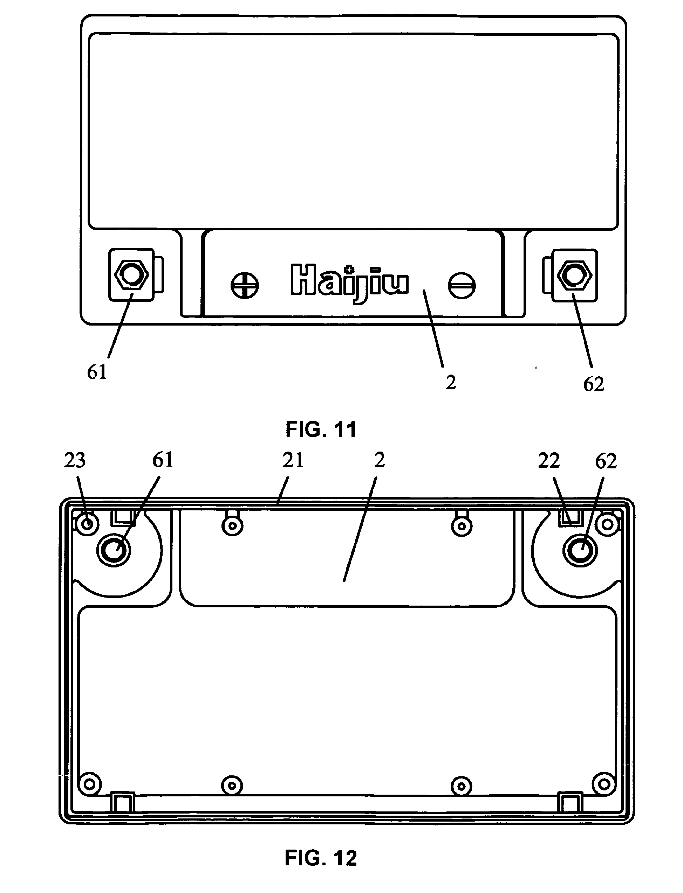

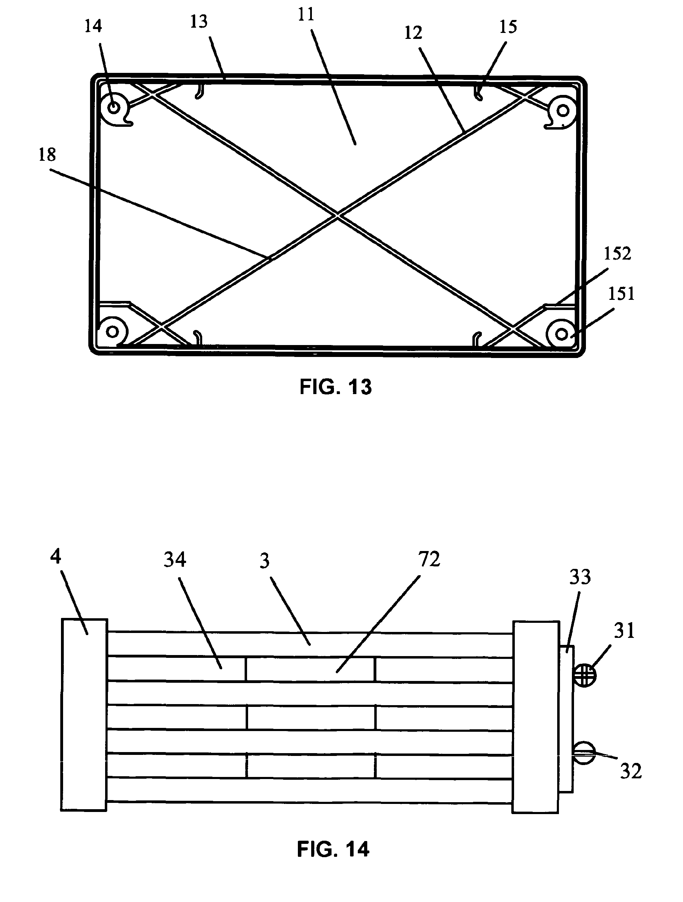

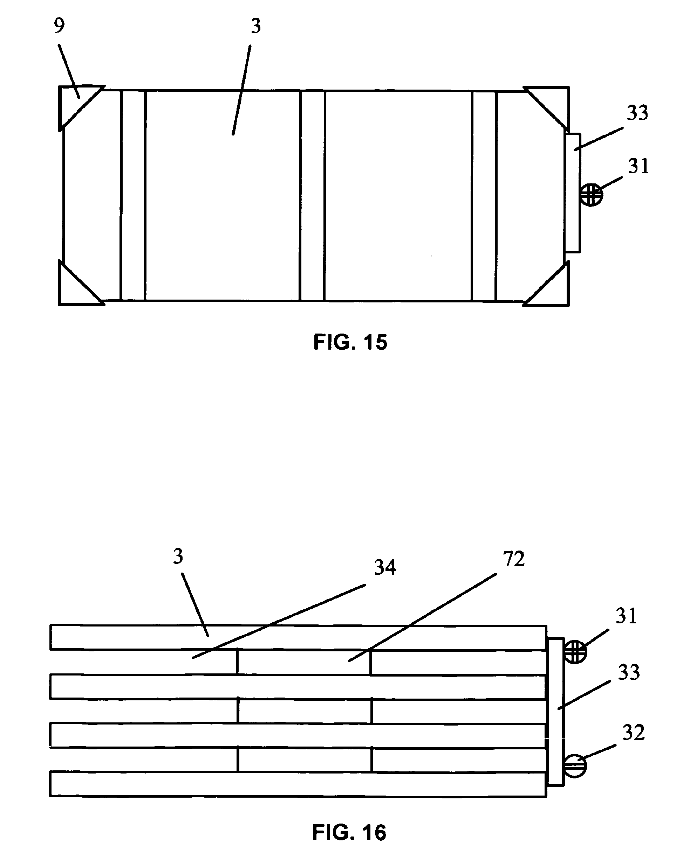

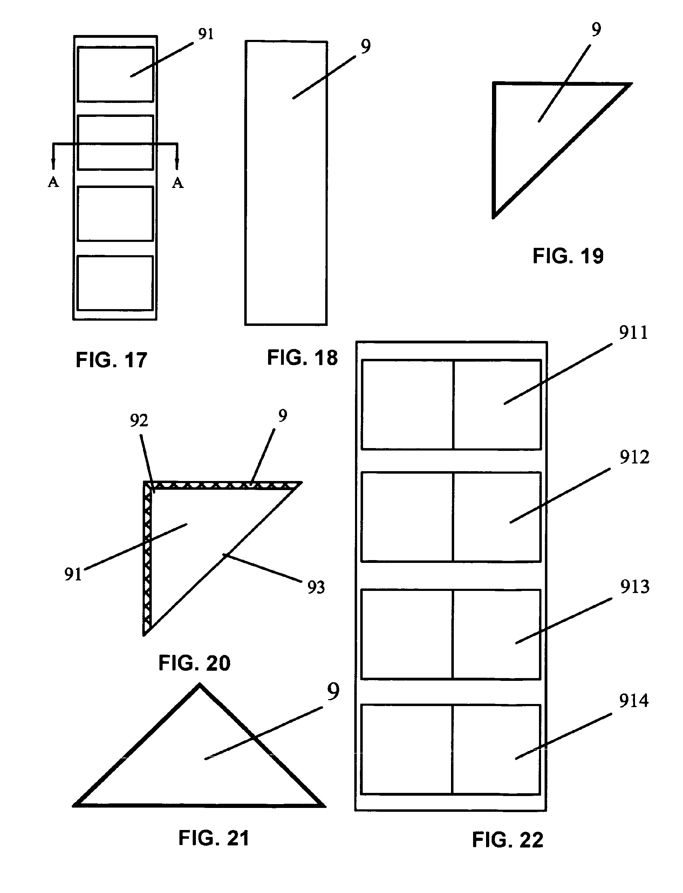

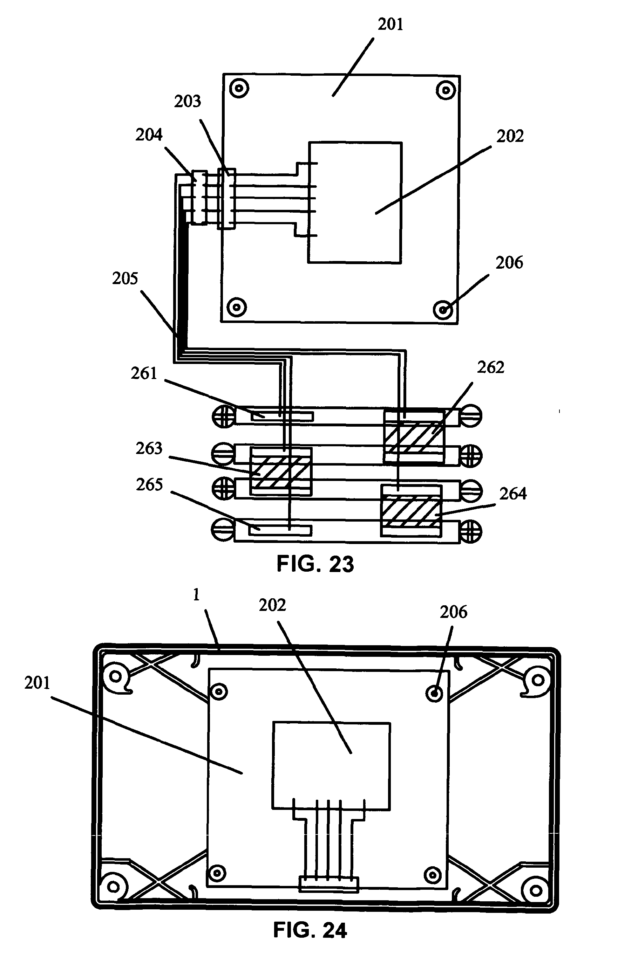

As shown in FIGS. 10-24, a lithium-ion battery specially used for starting motorcycles, in accordance with the invention, comprises a can 1, a cover 2, a cell assembly 3, a cell bracket 4, a positive lead, a negative lead, a positive terminal 61, a negative terminal 62, insulation sleeves, four fixed screws, seal rings, six support cushions 72, in which the cell assembly 3 comprises four 3.2 V lithium-ion cells in series via a patch panel 33. The four lithium-ion cells are parallel and overlap with one another and the two adjacent lithium-ion cells form a clearance 34, having the same structure as described in Example 1. The cell assembly 3 is arranged with a positive electrode 31 and a negative electrode 32 and each clearance 34 between the two adjacent lithium-ion cells is arranged with a long support cushion 72.

The cell bracket 4 comprises four bracket bodies 9 and each bracket body 9 is in the shape of a triangular prism and each bracket body 9 is arranged with a four-layer cavity 91. The four-layer cavity 91 comprises a No. 1 cavity 911, a No. 2 cavity 912, a No. 3 cavity 913 and a No. 4 cavity 914, which overlap with one another. In this example, the cavity 91 is in the shape of a right triangular prism and the bottom of the cavity 91 is in the shape of an isosceles right-angled triangle, i.e. a right angle 92 exists at the bottom of the cavity 91. The bottom of the cavity 91, in accordance with the invention, can be arranged into other types of right angles according to actual conditions apart from the isosceles right-angled triangle. The cavity 91 is arranged with an inlet 93, which is opposite to the right angle 92 of the right triangle of the cavity 91, i.e. the inlet 93 is opposite to the right angle 92. The bracket bodies 9 in this example can be made into standard parts, but more importantly, they are preferably designed into 4-6 different specifications according to the height of the cavity 91, thus the bracket bodies 9 can be applied to different starting batteries with hundreds of specifications. Consequently, more materials are saved and fewer moulds are required and the costs on moulds and mould making are reduced. Moreover, the applicability of the bracket bodies 9 is extended and versatility is improved.

The cell assembly 3 is mounted on the cell bracket 4, i.e. four lithium-ion cells are mounted on the cell bracket 4. The four lithium-ion cells overlap with one another and four angles of each lithium-ion cell are separately mounted in the cavity 91 at the same level in the four bracket bodies 9, for example, the four angles of the first lithium-ion cell are mounted in the No. 1 cavity 911 of the four bracket bodies 9, the four angles of the second lithium-ion cell are mounted in the No. 2 cavity 912, the four angles of the third lithium-ion cell are mounted in the No. 3 cavity 913, and four angles of the fourth lithium-ion cell are mounted in the No. 4 cavity 914. Insert the four angles of the lithium-ion cell into the cavity 91 through the inlet 93 and enable each angle of the lithium-ion cell to overlap with the right angle 92 of the cavity 91, therefore the lithium-ion cells can be securely mounted in the cell bracket 4. The four lithium-ion cells, in accordance with this example, are in parallel with one another. The space between lower surfaces of the four angles of each lithium-ion cell and the bottom of the cavity 91 can be reinforced by adhesives, so that the lithium-ion cells can be securely fixed on the cell bracket 4. Normally, the upper surfaces of the four angles of each lithium-ion cell and the top of the cavity 91 form a certain clearance therebetween. Therefore the lithium-ion cells can be mounted on the cell bracket 4 as long as the lower surfaces of the four angles of each lithium-ion cell and the bottom of the cavity 91 are fixed. Consequently, the bracket bodies 9 can be made into standard parts to reduce production costs.

The positive terminal 61 and the negative terminal 62 are both fixed on the cover 2 by injection molding and they are both mounted with insulation sleeves. One end of the positive lead is fixed on the positive terminal 61 by screws and the other end is fixed on the positive electrode 31 of the cell assembly 3 while one end of the negative lead is fixed on the negative terminal 62 by screws and the other end is fixed on the negative electrode 32 of the cell assembly 3.

The can 1 is in the shape of an open-mouthed rectangular and it comprises a battery mounting chamber 11. The bottom of the battery mounting chamber 11 is arranged with a boss 12, matching the shape and size of the cell bracket 4. Two opposite inner walls of the battery mounting chamber 11 are respectively arranged with two raised bars extending from the bottom to the top of the battery mounting chamber 11 along its inner walls. The end of the raised bars curves in its raised direction to form four slots 15 that match the bracket bodies. The other two opposite inner walls of the battery mounting chamber 11 are respectively arranged with two columns 151 extending from the bottom to the top of the battery mounting chamber 11 along its inner walls. The other two opposite inner walls of the battery mounting chamber 11 are arranged with a limit plate 152 that extends from the bottom to the top of the battery mounting chamber 11 along its inner walls and which is between the two columns 151 and meanwhile close to one of the columns 151. The slots 15 and the limit plate 152 are used to fix the bracket bodies 9. Alternatively, the limit plate 152 may not be used in this example and the slots 15 can be used in four sides instead. Therefore, the cell bracket 4 can be conveniently and securely fixed in the battery mounting chamber 11, so that the cell assembly 3 can be easily mounted in the battery mounting chamber 11. The top of the can 1 is arranged with a round of complete waterproof groove 13, which is around the periphery of the top of the can 1. The waterproof groove 13 is in the shape of a rectangle. The seal rings, having the shape and size matching the waterproof groove 13, are embedded in and closely contact with the waterproof groove 13.

The can 1 is arranged with four through holes 14 and the bottom of the cover 2 is arranged with four blind holes 23 matching the through holes 14 of the can 1. The fixed screws can go through the blind holes 23 and the through holes 14 to fix the cover 2 on the can 1. In this example, the bottom of the cover 2 is also arranged with four locating convex blocks 22 and a round of complete waterproof raised bar 21. The shape and size of the waterproof raised bar 21 matches the waterproof groove 13 of the can 1. When the cover 2 is fixed on the can 1 by the fixed screws, the waterproof raised bar 21 is embedded in and closely contact with the waterproof groove 13. When the cover 2 is fixed on the can 1 by the fixed screws, the four locating convex blocks 22 arranged at the bottom of the cover 2 hold the cell bracket 4 to allow it to be securely fixed in the battery mounting chamber 11 of the can 1.

The cover 2 also comprises an equalization circuit board 201 and blind holes 206, in which the equalization circuit board 201 is fixed on the cover 2 through the blind holes 206 by screws. The equalization circuit board 201 is mounted above the cell assembly 3 and comprises an equalization circuit 202 and a 5-pin socket 203. The socket 203 matches a plug 204, which is further connected with one end of a connecting wire 205 and the other end of the connecting wire 205 is connected with isoelectric points 261, 262, 263, 264 and 265 of the cell assembly 3. As a result, the equalization circuit 202 is capable of measuring and controlling the voltage of four cells within the cell assembly 3 so as to achieve a balanced voltage among individual cells. The voltage difference is controlled within 0.1 V to prevent overcharging of the batteries, so that the battery pack is protected and its service life is prolonged. When starting lithium-ion battery moulds are designed, unified mounting dimensions of the cover 2 are applied, therefore the same size of the equalization circuit board 201 is designed to apply to almost all starting batteries. Therefore, fewer models are to be managed and manufacturing costs are reduced.

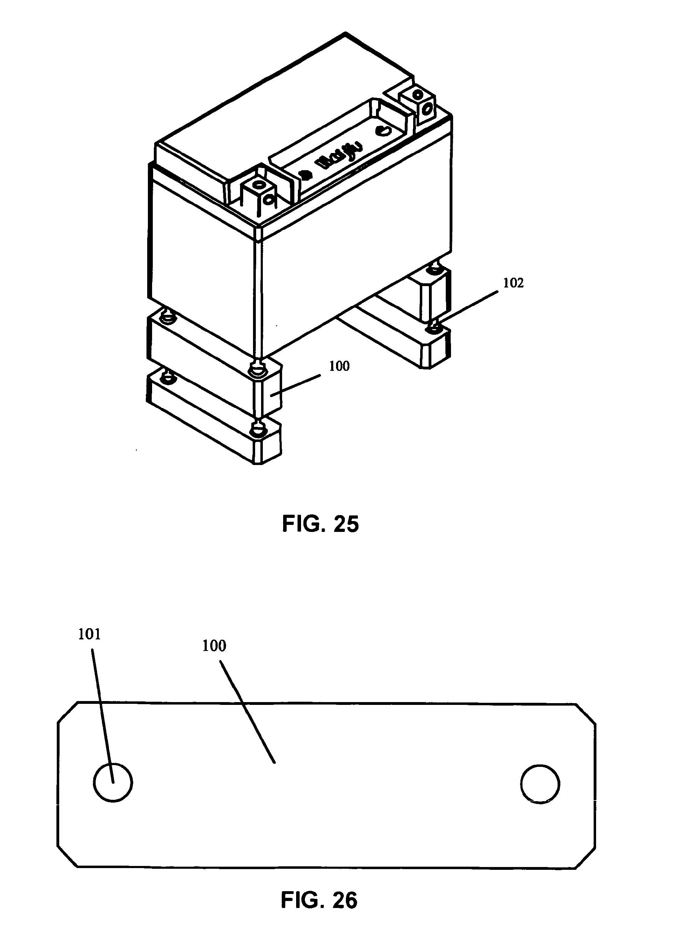

As shown in FIGS. 25 and 26, bases 100 can be optionally arranged at the bottom of the can 1. The lower surface of each base 100 is arranged with fixed holes 101 and the upper surface is arranged with support legs 102. When they are assembled, the support legs 102 are clamped in the through holes 14 and different sizes of the bases 100 can be mounted according to corresponding models of the batteries. The support legs 102 for different bases 100 can be inserted in the fixed holes 101 that are mounted on the bases 100. In order to change the dimensions of a battery, users may combine the bases 100 with different dimensions. Moreover, resistance cushions can also be mounted in the fixed holes 101 at the lower surface of the bases 100.

Because the inner space for mounting batteries is limited in a motorcycle, lead-acid batteries have almost hundreds of models and many models have the same length and width but the different height, therefore the low height batteries can be mounted in the spaces (the higher the space, the larger the capacity; motorcycles with different engine displacements need different capacity of batteries) that were previously used for batteries with higher height. Since the volumetric specific energy of a lithium-ion battery is three times of that of a lead-acid battery, it is possible to develop a plastic mould including the cover 2, the can 1 and the combinable bases 100 based on the dimensions of the shortest lead-acid battery to replace almost ten models of the lead-acid batteries having the same length and width. As a result, fewer technological equipment and moulds are required and battery costs are reduced.

Alternatively, the shape of the fixed support, in accordance with the above examples, may be in the shape of a "#" or parallel lines or others.

In the above examples, the number of the support cushions can be increased to nine or twelve. The support cushions are in a rectangular strip structure, two adjacent lithium-ion cells are arranged with three or four support cushions, which are parallel with one another. Due to the fact that the four lithium-ion cells are mounted on the cell bracket, in accordance with the invention, they have better anti-vibration performance and heat dissipation performance, especially when the four lithium-ion cells are mounted on the cell bracket horizontally. In such case, the support cushions can provide sufficient support and effectively prevent deformation of the lithium-ion cells, thus the performance of the lithium-ion battery provided by the invention is improved and its service life is prolonged.

## Claims

1. A lithium-ion battery for use in starting motorcycles, the lithium-ion battery comprising:
a positive terminal (61),
a negative terminal (62),
a positive lead (51),
a negative lead (52),
an open-mouthed rectangular can (1) comprising a battery mounting chamber (11),
a cover (2) matching the can (1), and
a cell assembly (3) comprising four lithium-ion cells in series, a positive electrode (31), and a negative electrode (32);
wherein
the positive terminal (61) and the negative terminal (62) are both fixed on the cover (2);
the cover (2) is fixed to the can (1);
one end of the positive lead (51) is fixed to the positive terminal (61) and the other end is fixed to the positive electrode (31) of the cell assembly (3);
one end of the negative lead (52) is fixed to the negative terminal (62) and the other end is fixed to the negative electrode (32) of the cell assembly (3); and
the four lithium-ion cells are in the shape of a flat rectangle, each lithium ion cell has four angles, and the four lithium-ion cells are parallel with one another;
**characterized in that**
the lithium-ion battery further comprises a cell bracket (4) mounted in the battery mounting chamber (11), and at least three support cushions (72);
a clearance (34) is formed between two adjacent lithium-ion cells, and the clearance (34) is arranged with at least one support cushion (72);
the cell bracket (4) comprises four bracket bodies (9);
each bracket body (9) is in the shape of a right triangular prism formed by a four-layered cavity (91);
the bottom of the cavity (91) is in the shape of a right triangle, and the four layers of the cavity (91) in each bracket body (9) overlap with one another;
each cavity (91) comprises an inlet (93), which is opposite to a right angle (92) of the right triangle of that cavity (91); and
the four angles of each lithium-ion cell are separately mounted in the cavities (91) at the same level of four bracket bodies (9).

2. The lithium-ion battery of claim 1, **characterized in that**
the positive terminal (61) and/or the negative terminal (62) is arranged with an insulation sleeve, respectively;
the cell assembly comprises four 3.2 V lithium-ion cells in series; the lithium-ion cells are all lithium iron phosphate batteries; and
a waterproof mechanism is arranged between the can (1) and the cover (2).

3. The lithium-ion battery of claim 2, **characterized in that** the waterproof mechanism comprises a waterproof groove (13) and a waterproof raised bar (21), in which the waterproof groove (13) is arranged on the top of the can (1) and the waterproof raised bar (21) that matches the waterproof groove (13) is arranged at the bottom of the cover (2); and the waterproof raised bar (21) is embedded in the waterproof groove (13).

4. The lithium-ion battery of claim 1, **characterized in that** four slots (15) are disposed on the inner wall of the battery mounting chamber (11); and the four bracket bodies (9) matching the four slots (15) are clamped in the slots (15), respectively.

5. The lithium-ion battery of claim 4, **characterized in that**
two opposite inner walls of the battery mounting chamber (11) are respectively arranged with two first raised bars extending from the bottom to the top of the battery mounting chamber (11) along its inner walls;
the end of the first raised bar curves in its raised direction to form four slots (15) that match the bracket bodies (9);
the other two opposite inner walls of the battery mounting chamber (11) are respectively arranged with two columns (151) extending from the bottom to the top of the battery mounting chamber (11) along its inner walls;
at least one of the two columns (151) has a second raised bar extending in the axial direction of that column (151);
the end of the second raised bar curves in its raised direction to form two limit raised bars that match the bracket bodies (9); and
the slots (15) and the limit raised bars are used to fix the bracket bodies (9).

6. The lithium-ion battery of claim 4, **characterized in that**
two opposite inner walls of the battery mounting chamber (11) are respectively arranged with two raised bars extending from the bottom to the top of the battery mounting chamber (11) along its inner walls;
the end of the raised bars curves in its raised direction to form four slots (15) that match the bracket bodies (9);
the other two opposite inner walls of the battery mounting chamber (11) are respectively arranged with two columns (151) extending from the bottom to the top of the battery mounting chamber (11) along its inner walls;
the other two opposite inner walls of the battery mounting chamber (11) are arranged with a limit plate (152) that extends from the bottom to the top of the battery mounting chamber (11) along its inner walls and which is between the two columns (151) and meanwhile close to one of the columns (151); and
the slots (15) and the limit plate (152) are used to fix the bracket bodies (9).

7. The lithium-ion battery of claim 2 or 3, **characterized in that** the lithium-ion battery further comprises bases (100), which are fixed at the bottom of the can (1); and the bottom of the cover (2) is arranged with a plurality of locating convex blocks (22), which hold the cell bracket (4).

8. The lithium-ion battery of claim 2 or 3, **characterized in that** the positive terminal (61) and the negative terminal (62) are both fixed on the cover (2) by injection molding; and one end of the positive lead (51) and the negative lead (52) is fixed on the positive terminal (61) and the negative terminal (62) by screws, respectively.

9. The lithium-ion battery of claim 3, **characterized in that** the lithium-ion battery further comprises a seal ring matching the waterproof groove (13) and the seal ring is mounted in the waterproof groove (13) of the can (1).

10. The lithium-ion battery of claim 2 or 3, **characterized in that**
the lithium-ion battery further comprises a plurality of fixed screws and the can (1) is arranged with matching through holes (14); the through holes (14) are perpendicular to the bottom of the can (1);
the upper end of each through hole (14) is on the top of the can (1) and the lower end is at the bottom of the can (1); the bottom of the cover (2) is arranged with blind holes (23) matching the through holes (14); and
the cover (2) is fixed on the can (1) via the fixed screws and the fixed screws go through the through holes (14) and the blind holes (23).

11. The lithium-ion battery of claim 5 or 6, **characterized in that**
the lithium-ion battery also comprises a plurality of fixed screws and the can (1) is arranged with matching through holes (14); the through holes (14) are perpendicular to the bottom of the can (1);
the upper end of each through hole (14) is on the top of the can (1) and the lower end is at the bottom of the can (1); the bottom of the cover (2) is arranged with blind holes (23) matching the through holes (14); and
the cover (2) is fixed on the can (1) via the fixed screws and the fixed screws go through the through holes (14) and the blind holes (23).

12. The lithium-ion battery of claim 11, **characterized in that** the through holes (14) are located at the center of the columns and extend through the whole columns in the axial direction of the columns.

13. The lithium-ion battery of claim 2 or 3, **characterized in that** the battery mounting chamber (11) of the can (1) is arranged with a wire duct matching the positive lead (51) and the negative lead (52), which are both in the wire duct; and the four lithium-ion cells in the cell assembly (3) are connected in series via a patch panel (33) or connecting wires.

14. The lithium-ion battery of claim 1 or 2 or 3, **characterized in that** the bottom of the can (1) is arranged with a fixed support (18), which is used to heighten the cell bracket (4) and which is in the shape of a "#", "X", or parallel lines.

15. The lithium-ion battery of claim 1 or 2 or 3, **characterized in that** the can (1) or the cover (2) is arranged with an equalization circuit (202), which is connected with the cell assembly (3) by means of the connecting wires (205).

16. The lithium-ion battery of claim 1, **characterized in that** two adjacent bracket bodies (9) can be coupled by reinforced ribs and/or tapes.

17. The lithium-ion battery of claim 16, **characterized in that** one right-angle side of the right triangular prism is closely against the inner wall of the can (1).

18. The lithium-ion battery of claim 7, **characterized in that** one side of each base (100) is arranged with a fixed hole (101) and the opposite side is arranged with a support leg (102), which is fixedly coupled to the fixed hole (101) at the outer bottom of the can (1); and the adjacent bases (100) are fixedly coupled together by the support legs (102) and the fixed holes (101) on the bases (100).

## Patentansprüche

1. Lithium-Ionen-Batterie zur Verwendung beim Anlassen von Motorrädern, wobei die Lithium-Ionen-Batterie Folgendes umfasst:
einen positiven Anschluss (61),
einen negativen Anschluss (62),
einen positiven Leiter (51),
einen negativen Leiter (52),
einen offenen rechteckigen Kanister (1), der eine Batteriemontagekammer (11) umfasst,
eine Abdeckung (2), die zum Kanister (1) passt, und
eine Zellenanordnung (3), die vier in Reihe geschaltete Lithium-Ionen-Zellen, eine positive Elektrode (31) und eine negative Elektrode (32) umfasst,
wobei
sowohl der positive Anschluss (61) als auch der negative Anschluss (62) an der Abdeckung (2) befestigt sind,
die Abdeckung (2) am Kanister (1) befestigt ist,
ein Ende des positiven Leiters (51) am positiven Anschluss (61) und das andere Ende an der positiven Elektrode (31) der Zellenanordnung (3) befestigt ist,
ein Ende des negativen Leiters (52) am negativen Anschluss (62) und das andere Ende an der negativen Elektrode (32) der Zellenanordnung (3) befestigt ist, und
die vier Lithium-Ionen-Zellen in Form flacher Rechtecke vorliegen, wobei jede Lithium-Ionen-Zelle vier Winkel aufweist und die vier Lithium-Ionen-Zellen parallel zueinander liegen,
**dadurch gekennzeichnet, dass**
die Lithium-Ionen-Batterie ferner eine Zellenhalterung (4), die in die Batteriemontagekammer (11) montiert ist, und mindestens drei Stützkissen (72) umfasst,
zwischen zwei benachbarten Lithium-Ionen-Zellen ein Freiraum (34) gebildet ist und der Freiraum (34) mit mindestens einem Stützkissen (72) angeordnet ist,
die Zellenhalterung (4) vier Halterungskörper (9) umfasst,
jeder Halterungskörper (9) in Form eines Prismas mit der Grundfläche eines rechtwinkligen Dreiecks vorliegt, das von einem vierschichtigen Hohlraum (91) gebildet ist,
der Boden des Hohlraumes (91) in Form eines rechtwinkligen Dreiecks vorliegt und die vier Schichten des Hohlraumes (91) in jedem Halterungskörper (9) einander überlappen,
jeder Hohlraum (91) einen Einlass (93) umfasst, der gegenüber einem rechten Winkel (92) des rechtwinkligen Dreiecks des Hohlraumes (91) liegt, und
die vier Winkel jeder Lithium-Ionen-Zelle auf dem gleichen Niveau von vier Halterungskörpern (9) separat in die Hohlräume (91) montiert sind.

2. Lithium-Ionen-Batterie nach Anspruch 1, **dadurch gekennzeichnet, dass**
der positive Anschluss (61) und/oder der negative Anschluss (62) jeweils mit einer Isolationshülse angeordnet ist/sind,
die Zellenanordnung vier in Reihe geschaltete 3,2-V- Lithium-Ionen-Zellen umfasst, wobei die Lithium-Ionen-Zellen sämtlich Lithium-Ionen-Phosphat-Batterien sind, und
zwischen dem Kanister (1) und der Abdeckung (2) ein wasserabdichtender Mechanismus angeordnet ist.

3. Lithium-Ionen-Batterie nach Anspruch 2, **dadurch gekennzeichnet, dass** der wasserabdichtende Mechanismus eine wasserabdichtende Rille (13) und eine wasserabdichtende erhabene Leiste (21) umfasst, wobei die wasserabdichtende Rille (13) auf der Oberseite des Kanisters (1) und die wasserabdichtende erhabene Leiste (21), welche zur wasserabdichtenden Rille (13) passt, an der Unterseite der Abdeckung (2) angeordnet und die wasserabdichtende erhabene Leiste (21) in die wasserabdichtenden Rille (13) eingebettet ist.

4. Lithium-Ionen-Batterie nach Anspruch 1, **dadurch gekennzeichnet, dass** an der Innenwand der Batteriemontagekammer (11) vier Schlitze (15) angeordnet sind und die vier Halterungskörper (9), die zu den vier Schlitzen (15) passen, entsprechend in die vier Schlitze (15) geklemmt sind.

5. Lithium-Ionen-Batterie nach Anspruch 4, **dadurch gekennzeichnet, dass**
die zwei gegenüberliegenden Innenwände der Batteriemontagekammer (11) jeweils mit zwei ersten erhabenen Leisten angeordnet sind, die sich entlang der Innenwände der Batteriemontagekammer (11) von der Unterseite zur Oberseite erstrecken,
sich das Ende der ersten erhabenen Leiste in deren Erhebungsrichtung wölbt, um vier Schlitze (15) zu bilden, die zu den Halterungskörpern (9) passen,
die anderen zwei gegenüberliegenden Innenwände der Batteriemontagekammer (11) jeweils mit zwei Säulen (151) angeordnet sind, die sich entlang der Innenwände der Batteriemontagekammer (11) von der Unterseite zur Oberseite erstrecken,
mindestens eine der zwei Säulen (151) eine zweite erhabene Leiste aufweist, die sich in Axialrichtung der Säule (151) erstreckt,
sich das Ende der zweiten erhabenen Leiste in deren Erhebungsrichtung wölbt, um zwei begrenzende erhabene Leisten zu bilden, die zu den Halterungskörpern (9) passen, und
die Schlitze (15) und die begrenzenden erhabenen Leisten verwendet werden, um die Halterungskörper (9) zu befestigen.

6. Lithium-Ionen-Batterie nach Anspruch 4, **dadurch gekennzeichnet, dass**
zwei gegenüberliegende Innenwände der Batteriemontagekammer (11) jeweils mit zwei erhabenen Leisten angeordnet sind, die sich entlang der Innenwände der Batteriemontagekammer (11) von der Unterseite zur Oberseite erstrecken,
sich das Ende der erhabenen Leisten in ihrer Erhebungsrichtung wölbt, um vier Schlitze (15) zu bilden, die zu den Halterungskörpern (9) passen,
die anderen zwei gegenüberliegenden Innenwände der Batteriemontagekammer (11) jeweils mit zwei Säulen (151) angeordnet sind, die sich entlang der Innenwände der Batteriemontagekammer (11) von der Unterseite zur Oberseite erstrecken,
die anderen zwei gegenüberliegenden Innenwände der Batteriemontagekammer (11) mit einer Begrenzungsplatte (152) angeordnet sind, die sich entlang der Innenwände der Batteriemontagekammer (11) von der Unterseite zur Oberseite erstreckt und die sich zwischen den zwei Säulen (151) und dabei nahe einer der Säulen (151) befindet, und
die Schlitze (15) und die Begrenzungsplatte (152) verwendet werden, um die Halterungskörper (9) zu befestigen.

7. Lithium-Ionen-Batterie nach Anspruch 2 oder 3, **dadurch gekennzeichnet, dass** die Lithium-Ionen-Batterie ferner Sockel (100) umfasst, die an der Unterseite des Kanisters (1) befestigt sind, und die Unterseite der Abdeckung (2) mit mehreren anordnenden konvexen Blöcken (22) angeordnet ist, welche die Zellhalterung (4) halten.

8. Lithium-Ionen-Batterie nach Anspruch 2 oder 3, **dadurch gekennzeichnet, dass** sowohl der positive Anschluss (61) als auch der negative Anschluss (62) durch Spritzgießen an der Abdeckung (2) befestigt sind, und jeweils ein Ende des positiven Leiters (51) und des negativen Leiters (52) durch Schrauben am positiven Anschluss (61) beziehungsweise am negativen Anschluss (62) befestigt ist.

9. Lithium-Ionen-Batterie nach Anspruch 3, **dadurch gekennzeichnet, dass** die Lithium-Ionen-Batterie ferner einen Dichtungsring umfasst, der zur wasserabdichtenden Rille (13) passt, und der Dichtungsring in die wasserabdichtende Rille (13) des Kanisters (1) montiert ist.

10. Lithium-Ionen-Batterie nach Anspruch 2 oder 3, **dadurch gekennzeichnet, dass**
die Lithium-Ionen-Batterie ferner mehrere Befestigungsschrauben umfasst und der Kanister (1) mit passenden Durchgangsöffnungen (14) angeordnet ist, wobei die Durchgangsöffnungen (14) senkrecht zur Unterseite des Kanisters (1) liegen,
das obere Ende jeder Durchgangsöffnung (14) auf der Oberseite des Kanisters (1) und das untere Ende an der Unterseite des Kanisters (1) liegt, wobei die Unterseite der Abdeckung (2) mit Blindöffnungen (23) angeordnet ist, die zu den Durchgangsöffnungen (14) passen, und
die Abdeckung (2) über die Befestigungsschrauben am Kanister (1) befestigt ist und die Befestigungsschrauben durch die Durchgangsöffnungen (14) und die Blindöffnungen (23) verlaufen.

11. Lithium-Ionen-Batterie nach Anspruch 5 oder 6, **dadurch gekennzeichnet, dass**
die Lithium-Ionen-Batterie außerdem mehrere Befestigungsschrauben umfasst und der Kanister (1) mit passenden Durchgangsöffnungen (14) angeordnet ist, wobei die Durchgangsöffnungen (14) senkrecht zur Unterseite des Kanisters (1) liegen,
das obere Ende jeder Durchgangsöffnung (14) auf der Oberseite des Kanisters (1) liegt und das untere Ende an der Unterseite des Kanisters (1), wobei die Unterseite der Abdeckung (2) mit Blindöffnungen (23) angeordnet ist, die zu den Durchgangsöffnungen (14) passen, und
die Abdeckung (2) mittels der Befestigungsschrauben am Kanister (1) befestigt ist und die Befestigungsschrauben durch die Durchgangsöffnungen (14) und die Blindöffnungen (23) verlaufen.

12. Lithium-Ionen-Batterie nach Anspruch 11, **dadurch gekennzeichnet, dass** die Durchgangsöffnungen (14) in der Mitte der Säulen angeordnet sind und sich in Axialrichtung der Säulen durch die gesamten Säulen erstrecken.

13. Lithium-Ionen-Batterie nach Anspruch 2 oder 3, **dadurch gekennzeichnet, dass** die Batteriemontagekammer (11) des Kanisters (1) mit einem Kabelkanal angeordnet ist, der zum positiven Leiter (51) und zum negativen Leiter (52) passt, die sich beide im Kabelkanal befinden, und die vier Lithium-Ionen-Zellen in der Zellenanordnung (3) mittels einer Stecktafel (33) oder Verbindungskabeln in Reihe geschaltet sind.

14. Lithium-Ionen-Batterie nach Anspruch 1, 2 oder 3, **dadurch gekennzeichnet, dass** die Unterseite des Kanisters (1) mit einem feststehenden Träger (18) angeordnet ist, der verwendet wird, um die Zellhalterung (4) zu erhöhen und der in Form eines "#", eines "X" oder paralleler Linien vorliegt.

15. Lithium-Ionen-Batterie nach Anspruch 1, 2 oder 3, **dadurch gekennzeichnet, dass** der Kanister (1) oder die Abdeckung (2) mit einer Ausgleichsschaltung (202) angeordnet ist, die mittels der Verbindungsdrähte (205) mit der Zellenanordnung (3) verbunden ist.

16. Lithium-Ionen-Batterie nach Anspruch 1, **dadurch gekennzeichnet, dass** zwei benachbarte Halterungskörper (9) durch Verstärkungsrippen und/oder -bänder gekoppelt sein können.

17. Lithium-Ionen-Batterie nach Anspruch 16, **dadurch gekennzeichnet, dass** eine Seite des rechten Winkels des Prismas mit der Grundfläche eines rechtwinkligen Dreiecks eng an der Innenwand des Kanisters (1) liegt.

18. Lithium-Ionen-Batterie nach Anspruch 7, **dadurch gekennzeichnet, dass** eine Seite jedes Sockels (100) mit einer Befestigungsöffnung (101) und die gegenüberliegende Seite mit einem Trägerschenkel (102) angeordnet ist, der feststehend mit der Befestigungsöffnung (101) an die äußere Unterseite des Kanisters (1) gekoppelt ist, und die benachbarten Sockel (100) durch die Trägerschenkel (102) und die Befestigungsöffnungen (101) in den Sockeln (100) feststehend miteinander gekoppelt sind.

## Revendications

1. Batterie au lithium-ion destinée à être utilisée dans le démarrage des motos, la pile au lithium-ion comprenant :
une borne positive (61),
une borne négative (62),
un fil positif (51),
un fil négatif (52),
un boîtier rectangulaire à embouchure ouverte (1) comprenant une chambre de montage de batterie (11),
un couvercle (2) adapté au boîtier (1), et
un assemblage de cellules (3) comprenant quatre cellules au lithium-ion en série, une électrode positive (31) et une électrode négative (32) ;
dans laquelle
la borne positive (61) et la borne négative (62) sont toutes deux fixées sur le couvercle (2) ;
le couvercle (2) est fixé au boîtier (1) ;
une extrémité du fil positif (51) est fixée à la borne positive (61) et l'autre extrémité est fixée à l'électrode positive (31) de l'assemblage de cellules (3) ;
une extrémité du fil négatif (52) est fixée à la borne négative (62) et l'autre extrémité est fixée à l'électrode négative (32) de l'assemblage de cellules (3) ;
les quatre cellules au lithium-ion se présentent sous la forme d'un rectangle plat, chaque cellule au lithium-ion possédant quatre angles, et les quatre cellules au lithium-ion étant parallèles les unes aux autres ;
**caractérisée en ce que**
la batterie au lithium-ion comprend en outre un support de cellules (4) monté dans la chambre de montage de batterie (11), et au moins trois coussinets de support (72) ;
un espacement (34) est formé entre deux cellules au lithium-ion adjacentes, et l'espacement (34) est arrangé avec au moins un coussinet de support (72) ;
le support de cellules (4) comprend quatre corps de support (9) ;
chaque corps de support (9) se présente sous la forme d'un prisme triangulaire droit, formé par une cavité à quatre couches (91) ;
le fond de la cavité (91) se présente sous la forme d'un triangle rectangle, et les quatre couches de la cavité (91) dans chaque corps de support (9) sont superposées les unes aux autres ;
chaque cavité (91) comprend une entrée (93) opposée à un angle droit (92) du triangle rectangle de cette cavité (91) ; et
les quatre angles de chaque cellule au lithium-ion sont montés séparément dans les cavités (91) au même niveau que les quatre corps de support (9).

2. Batterie au lithium-ion selon la revendication 1, **caractérisée en ce que**
la borne positive (61) et/ou la borne négative (62) sont arrangées avec un manchon d'isolation, respectivement ;
l'assemblage de cellules comprend des cellules au lithium-ion de 3,2 V en série ; les cellules au lithium-ion sont des batteries au lithium phosphate de fer ; et
un mécanisme étanche à l'eau est agencé entre le boîtier (1) et le couvercle (2).

3. Batterie au lithium-ion selon la revendication 2, **caractérisée en ce que** le mécanisme étanche à l'eau comprend une rainure étanche à l'eau (13) et une barre relevée étanche à l'eau (21), sachant que la rainure étanche à l'eau (13) est arrangée sur le dessus du boîtier (1) et la barre relevée étanche à l'eau (21) adaptée à la rainure étanche à l'eau (13) est arrangée en bas du couvercle (2) ; et la barre relevée étanche à l'eau (21) est insérée dans la rainure étanche à l'eau (13).

4. Batterie au lithium-ion selon la revendication 1, **caractérisée en ce que** quatre fentes (15) sont prévues dans la paroi intérieure de la chambre de montage de batterie (11) ; et les quatre corps de support (9) adaptés aux quatre fentes (15) sont respectivement serrés dans les fentes (15).

5. Batterie au lithium-ion selon la revendication 4, **caractérisée en ce que**
deux parois intérieures opposées de la chambre de montage de batterie (11) sont respectivement arrangées avec deux premières barres relevées s'étendant du bas vers le haut de la chambre de montage de batterie (11) le long de ses parois intérieures ;
l'extrémité de la première barre relevée est courbée dans sa direction de relèvement pour former quatre fentes (15) correspondant aux corps de support (9) ;
les deux autres parois intérieures opposées de la chambre de montage de batterie (11) sont respectivement arrangées avec deux colonnes (151) s'étendant du bas vers le haut de la chambre de montage de batterie (11) le long de ses parois intérieures ;
au moins l'une des deux colonnes (151) possède une deuxième barre relevée s'étendant dans la direction axiale de cette colonne (151) ;
l'extrémité de la deuxième barre relevée est courbée dans sa direction de relèvement pour former deux barres relevées de limitation correspondant aux corps de support (9) ; et
les fentes (15) et les barres relevées de limitation sont utilisées pour fixer les corps de support (9).

6. Batterie au lithium-ion selon la revendication 4, **caractérisée en ce que**
deux parois intérieures opposées de la chambre de montage de batterie (11) sont respectivement arrangées avec deux barres relevées s'étendant du bas vers le haut de la chambre de montage de batterie (11) le long de ses parois intérieures ;
l'extrémité des barres relevées est courbée dans leur direction de relèvement pour former quatre fentes (15) correspondant aux corps de support (9) ;
les deux autres parois intérieures opposées de la chambre de montage de batterie (11) sont respectivement arrangées avec deux colonnes (151) s'étendant du bas vers le haut de la chambre de montage de batterie (11) le long de ses parois intérieures ;
les deux autres parois intérieures opposes de la chambre de montage de batterie (11) sont arrangées avec une plaque de limitation (152) s'étendant du bas vers le haut de la chambre de montage de batterie (11), le long de ses parois intérieures, et se trouvant entre les deux colonnes (151) tout en étant proche de l'une des colonnes (151) ; et
les fentes (15) et la plaque de limitation (152) sont utilisées pour fixer les corps de support (9).

7. Batterie au lithium-ion selon la revendication 2 ou 3, **caractérisée en ce que** la batterie au lithium-ion comprend en outre des bases (100) fixées au fond du boîtier (1) ; et le fond du couvercle (2) est arrangé avec une pluralité de blocs convexes de positionnement (22) destinés à maintenir le support de cellules (4).

8. Batterie au lithium-ion selon la revendication 2 ou 3, **caractérisée en ce que** la borne positive (61) et la borne négative (62) sont toutes deux fixées sur le couvercle (2) par moulage par injection ; et une extrémité du fil positif (51) et du fil négatif (52) est fixée sur la borne positive (61) et la borne négative (62) par des vis, respectivement.

9. Batterie au lithium-ion selon la revendication 3, **caractérisée en ce que** la batterie au lithium-ion comprend en outre une bague d'étanchéité correspondant à la rainure étanche à l'eau (13), et la bague d'étanchéité est montée dans la rainure étanche à l'eau (13) du boîtier (1).

10. Batterie au lithium-ion selon la revendication 2 ou 3, **caractérisée en ce que**
la batterie au lithium-ion comprend en outre une pluralité de vis fixées et le boîtier (1) est arrangé avec des trous de passage (14) correspondants ; les trous de passage (14) sont perpendiculaires au fond du boîtier (1) ;
l'extrémité supérieure de chaque trou de passage (14) se trouve sur le dessus du boîtier (1) et l'extrémité inférieure se trouve au fond du boîtier (1) ; le fond du couvercle (2) est arrangé avec des trous borgnes (23) correspondant aux trous de passage (14) ; et
le couvercle (2) est fixé sur le boîtier (1) par le biais des vis fixées et les vis fixées traversent les trous de passage (14) et les trous borgnes (23).

11. Batterie au lithium-ion selon la revendication 5 ou 6, **caractérisée en ce que**
la batterie au lithium-ion comprend également une pluralité de vis fixées et le boîtier (1) est arrangé avec des trous de passage (14) correspondants ; les trous de passage (14) sont perpendiculaires au fond du boîtier (1) ;
l'extrémité supérieure de chaque trou de passage (14) se trouve sur le dessus du boîtier (1) et l'extrémité inférieure se trouve au fond du boîtier (1) ; le fond du couvercle (2) est arrangé avec des trous borgnes (23) correspondant aux trous de passage (14) ; et
le couvercle (2) est fixé sur le boîtier (1) par le biais des vis fixées et les vis fixées traversent les trous de passage (14) et les trous borgnes (23).

12. Batterie au lithium-ion selon la revendication 11, **caractérisée en ce que** les trous de passage (14) se trouvent au centre des colonnes et s'étendent à travers l'ensemble des colonnes dans la direction axiale des colonnes.

13. Batterie au lithium-ion selon la revendication 2 ou 3, **caractérisée en ce que** la chambre de montage de batterie (11) du boîtier (1) est arrangée avec un conduit de câbles correspondant au fil positif (51) et au fil négatif (52), qui se trouvent tous deux dans le conduit de câbles ; et les quatre cellules au lithium-ion dans l'assemblage de cellules (3) sont reliées en série par le biais d'un tableau de raccordement (33) ou de câbles de connexion.

14. Batterie au lithium-ion selon la revendication 1 ou 2 ou 3, **caractérisée en ce que** le fond du boîtier (1) est arrangé avec un support fixe (18) utilisé pour relever le support de cellules (4) et présentant une forme de « # », de « X » ou de lignes parallèles.

15. Batterie au lithium-ion selon la revendication 1 ou 2 ou 3, **caractérisée en ce que** le boîtier (1) ou le couvercle (2) est arrangé avec un circuit d'égalisation (202) relié à l'assemblage de cellules (3) à l'aide des câbles de connexion (205).

16. Batterie au lithium-ion selon la revendication 1, **caractérisée en ce que** deux corps de support (9) adjacents peuvent être accouplés par des nervures de renfort et/ou des rubans.

17. Batterie au lithium-ion selon la revendication 16, **caractérisée en ce qu'**un côté en angle droit du prisme triangulaire droit s'applique étroitement contre la paroi intérieure du boîtier (1).

18. Batterie au lithium-ion selon la revendication 7, **caractérisée en ce qu'**un côté de chaque base (100) est arrangé avec un trou fixe (101) et le côté opposé est arrangé avec une jambe de support (102) fixement accouplée au trou fixe (101) au niveau du fond extérieur du boîtier (1) ; et les bases adjacentes (100) sont couplées fixement les unes aux autres par les jambes de support (102) et les trous fixes (101) sur les bases (100).
